# FASCICULE DE BREVET EUROPEEN

(11) **EP 3 802 329 B1**
(45) Date de publication et mention de la délivrance du brevet: **23.04.2025**
(21) Numéro de dépôt: 19726008.6
(22) Date de dépôt: 28.05.2019
(51) Int. Cl.: B64G 1/22

(54) **DISPOSITIF PORTEUR DÉPLOYABLE POUR ÉQUIPEMENT DE SATELLITE**
EINSETZBARE TRÄGERVORRICHTUNG FÜR SATELLITENGERÄTE
CARRIER DEVICE DEPLOYABLE FOR SATELLITE EQUIPMENT

(30) Priorité: 29.05.2018 FR 1854589; 29.05.2018 FR 1854591
(43) Date de publication de la demande: 14.04.2021
(73) Titulaire: ArianeGroup SAS, 78130 Les Mureaux (FR)
(72) Inventeur: VINCENT, Cyrille, 33920 SAINT CHRISTOLY DE BLAYE (FR); DEFOORT, Brigitte, 33160 SAINT MEDARD EN JALLES (FR); GUIHARD, Davy, 33480 CASTELNAU DE MEDOC (FR); HUMBLOT, Antoine, 33160 SAINT MEDARD EN JALLES (FR); LACOUR, Dominique, 33370 TRESSES (FR); LAVAUD, Marc, 33680 LACANAU (FR); MENOCHET, Audrey, 33110 LE BOUSCAT (FR); MUSSET, Marie, 33700 MERIGNAC (FR); VILLEMAIN, Alexis, 33160 SAINT MEDARD EN JALLES (FR); GRIGNON, Nicolas, 33185 LE HAILLAN (FR)
(74) Mandataire: Cabinet Le Guen Maillet
(86) Numéro de dépôt international: PCT/EP2019/063725
(87) Numéro de publication internationale: WO 2019/229022

(56) Documents cités:
- EP-A1- 0 336 837
- WO-A1-97/45891
- WO-A2-97/42682
- FR-A1- 2 525 266
- GB-A- 2 072 295
- RU-C1- 2 419 925
- US-A- 2 989 329
- US-A- 5 315 795
- US-B1- 6 494 636

## Description

### Domaine de l'invention

La présente invention concerne une structure télescopique pour satellite, sous forme d'un dispositif porteur pour un équipement d'un satellite déployable au moyen d'un tube gonflable, notamment pour réaliser un mât tel qu'un mât d'antenne de satellite qui est monté replié lors du lancement de la fusée portant le satellite et qui sera déployé une fois le satellite à poste. La présente invention concerne également la réalisation de segments pourvus de moyens d'encliquetage et de retenue des segments du dispositif porteur.

### Arrière plan technologique

Pour déployer des organes sur un satellite on connait les mâts gonflables et notamment des mâts gonflables solidifiables par polymérisation de dispositifs d'armature ou solidification de l'enveloppe du tube gonflable réalisant le mât.

Ces dispositifs nécessitent toutefois un générateur de gaz adapté à maintenir la pression dans le mât au moins le temps de la polymérisation de l'armature ou du tube.

Ces dispositifs nécessitent en outre de concevoir des tubes gonflables résistants à l'ambiance spatiale et utilisent pour ce faire des multicouches complexes alliant forte étanchéité grande légèreté et grande résistance aux UV notamment.

Le document GB-A-2 072 295 divulgue un dispositif porteur pour un équipement d'un satellite de l'état de la technique.

### Brève description de l'invention

D'une part, la présente invention vise à réduire la capacité du générateur de gaz et simplifier la réalisation du tube gonflable en réalisant un mât télescopique sous forme de segments gigognes dans lequel se trouve un tube gonflable simple devant être maintenu gonflé uniquement le temps de déploiement du mât.

D'autre part, la présente invention vise à proposer un mât aisé à monter et à démonter pour faciliter les tests unitaires avant lancement et prévoir des moyens de verrouillage mutuel et des moyens de retenue des segments adaptés en conséquence.

L'invention concerne un dispositif selon la revendication 1.

Dans une forme de réalisation, le tube gonflable comprend un générateur de gaz, ledit générateur de gaz disposé à l'intérieur des segments gigognes imbriqués.

Dans une forme de réalisation, le dispositif porteur comporte une base support du segment le plus externe et du générateur de gaz.

Dans une forme de réalisation, le dispositif comporte un couvercle support d'un équipement et dont la face inférieure constitue une face d'appui lors du déploiement du tube gonflable.

Dans une forme de réalisation, le dispositif porteur comporte des verrous à tige rétractable adaptés à verrouiller ensemble les segments imbriqués en position mât replié.

Dans une forme de réalisation, les moyens d'accrochage sont des oreilles ou des collerettes.

Dans une forme de réalisation, les segments en position mât replié, la collerette ou les oreilles d'un segment de rang n reposent sur le bord du segment de rang n-1 qui l'entoure, ou segment adjacent externe.

Dans une forme de réalisation, les oreilles comportent des trous de passage de câbles antenne se déployant avec le mât.

Dans une forme de réalisation, les segments sont pourvus de moyens d'encliquetage mutuels mât en position dépliée et de nervures s'opposant à une rotation des segments les uns par rapport aux autres.

L'invention concerne également un ensemble comportant un dispositif porteur selon l'invention et une antenne.

Dans une forme de réalisation, l'antenne consiste en une métallisation formée de couches métalliques disposées sur les segments cylindriques gigognes de sorte à former un motif hélicoïdal lorsque le mât est déplié.

Dans une forme de réalisation, les couches métalliques d'un segment sont connectées électriquement aux couches métalliques du ou des segments adjacents au moyen de languettes de connexion disposées dans des fentes desdits segments.

Dans une forme de réalisation, les couches métalliques sont en cuivre, ou en nickel, ou en or.

Dans une forme de réalisation, l'antenne comporte des câbles antenne disposés sur le mât de manière hélicoïdale.

L'invention concerne également un dispositif porteur selon la revendication 10.

Dans une forme de réalisation, le système de verrouillage comporte d'une part le pion et la butée supérieure et d'autre part une languette ressort portée par un segment externe dont l'extrémité libre vient s'encliqueter sur un bord inférieur d'un segment interne mât en position dépliée.

Dans une forme de réalisation, la languette ressort est reçue dans une rainure de guidage.

Dans une forme de réalisation, les segments sont démontables au moyen d'un outil annulaire du diamètre d'un segment interne glissé dans un segment externe et repoussant la languette pour permettre le passage et l'extraction d'un segment interne.

Dans une forme de réalisation, les segments sont pourvus de moyens d'indexage s'opposant à une rotation des segments les uns par rapport aux autres.

### Brève description des dessins

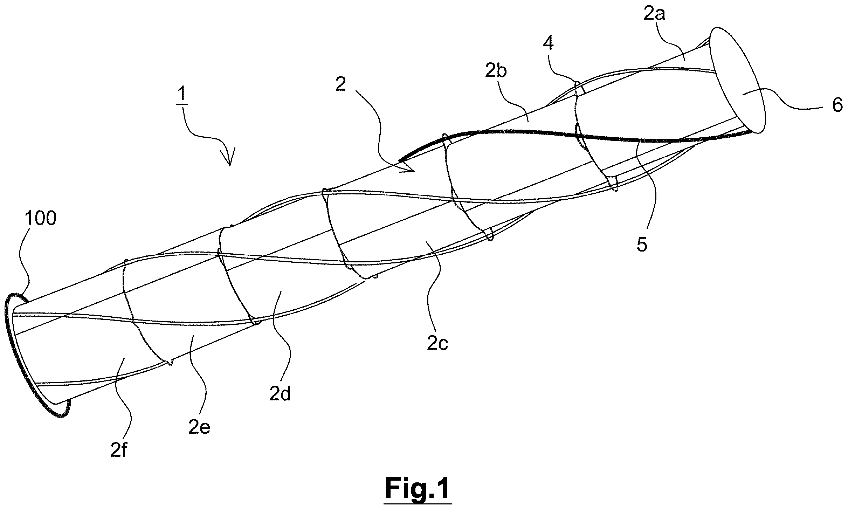

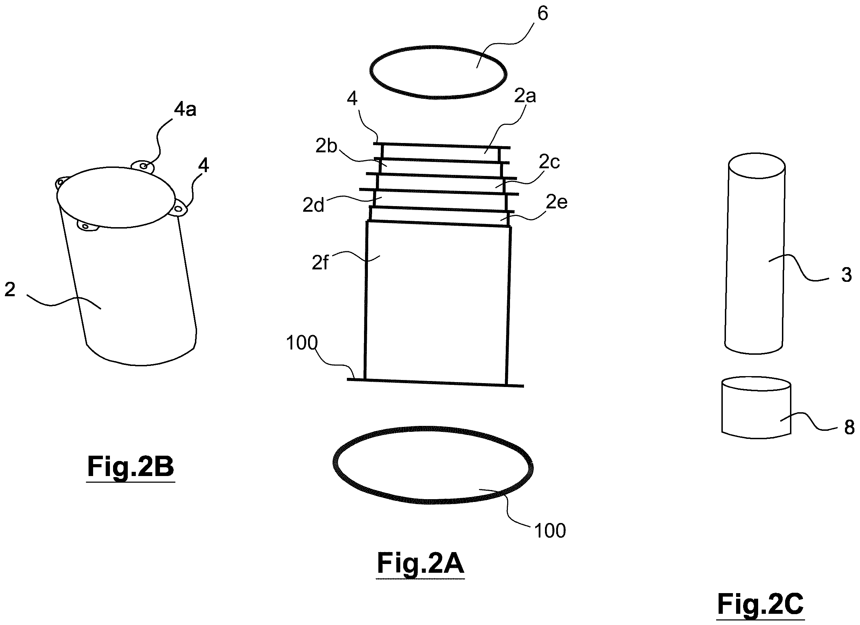

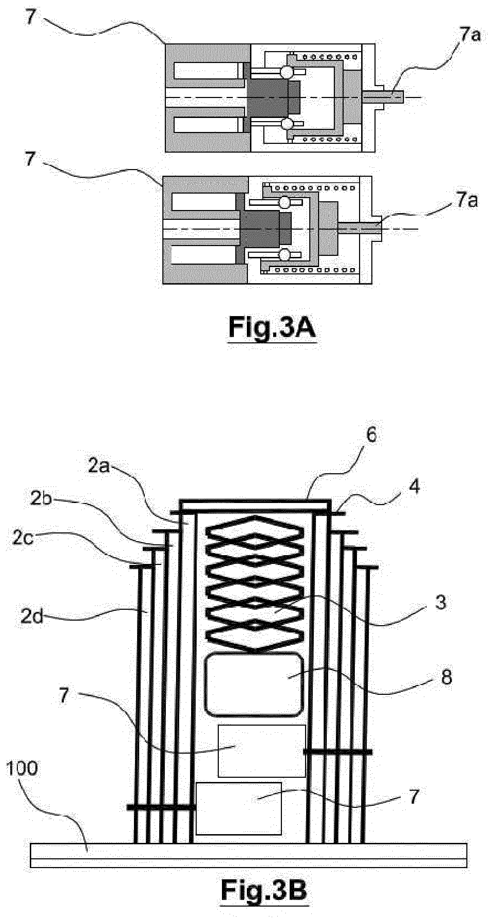

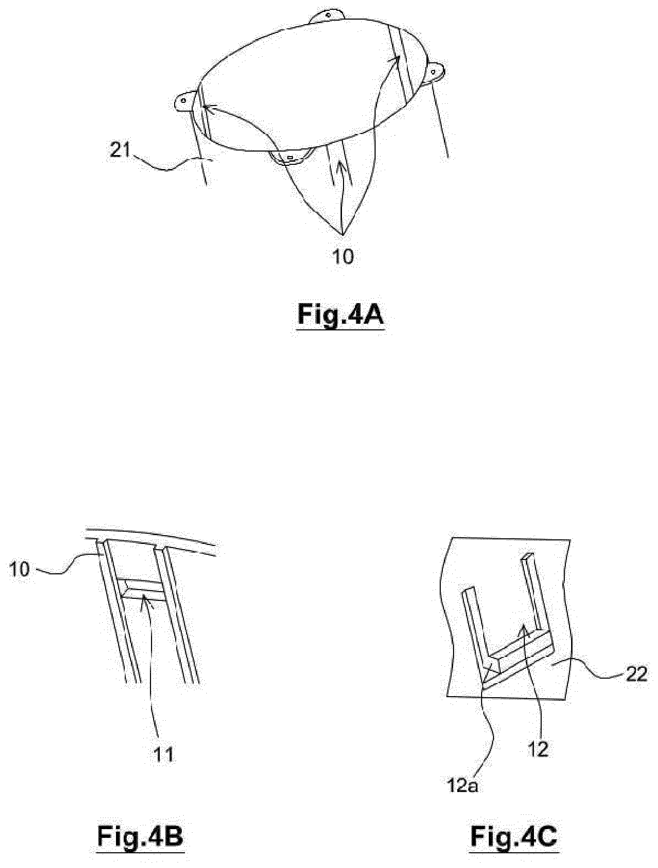

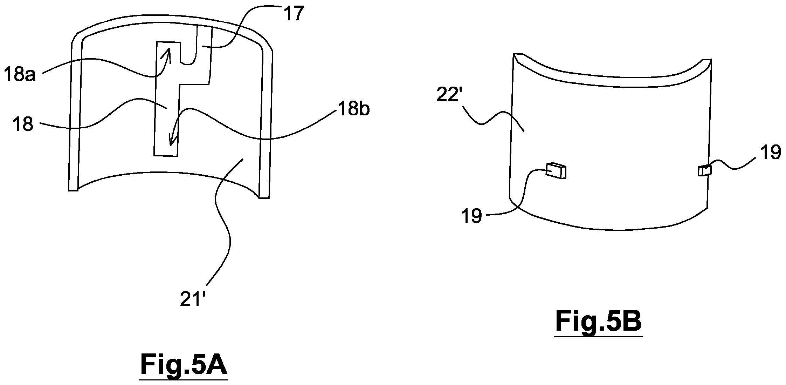

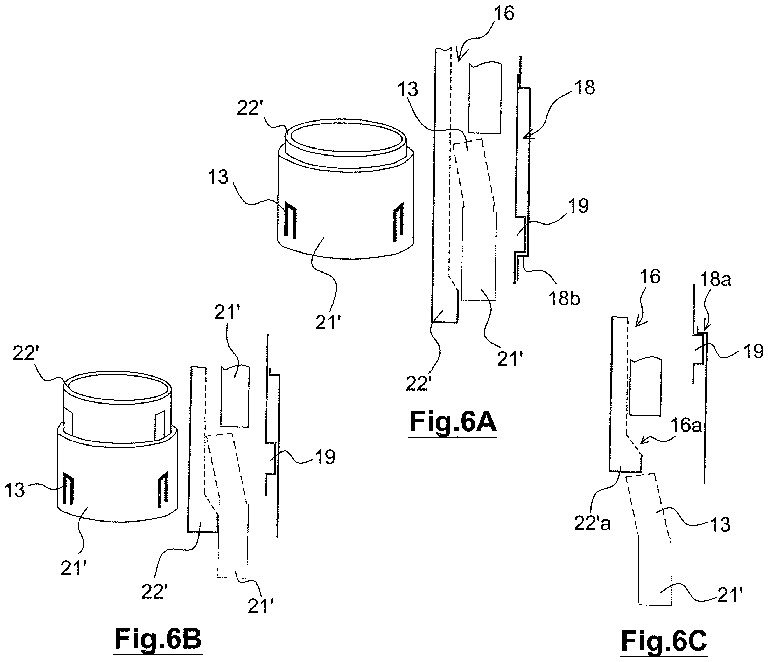

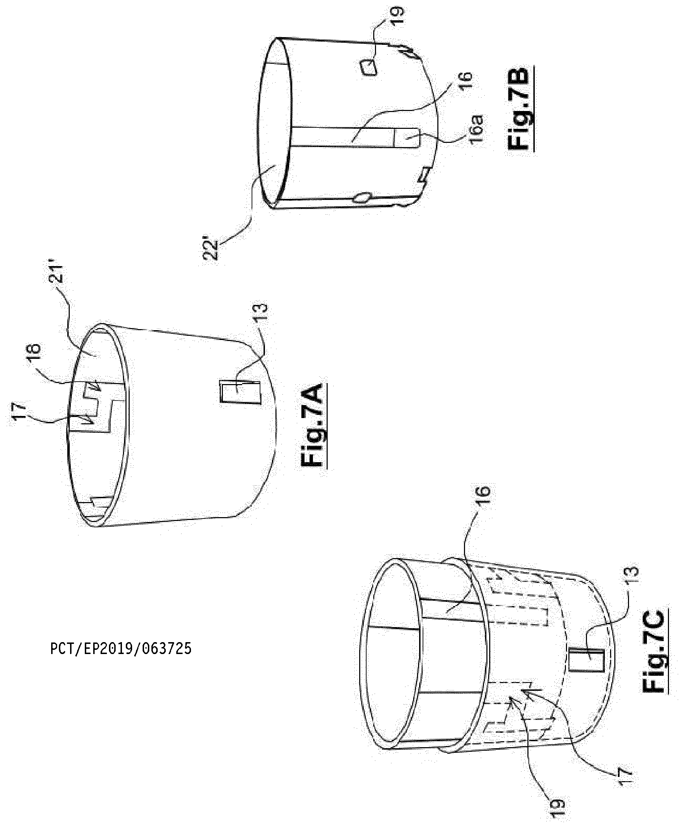

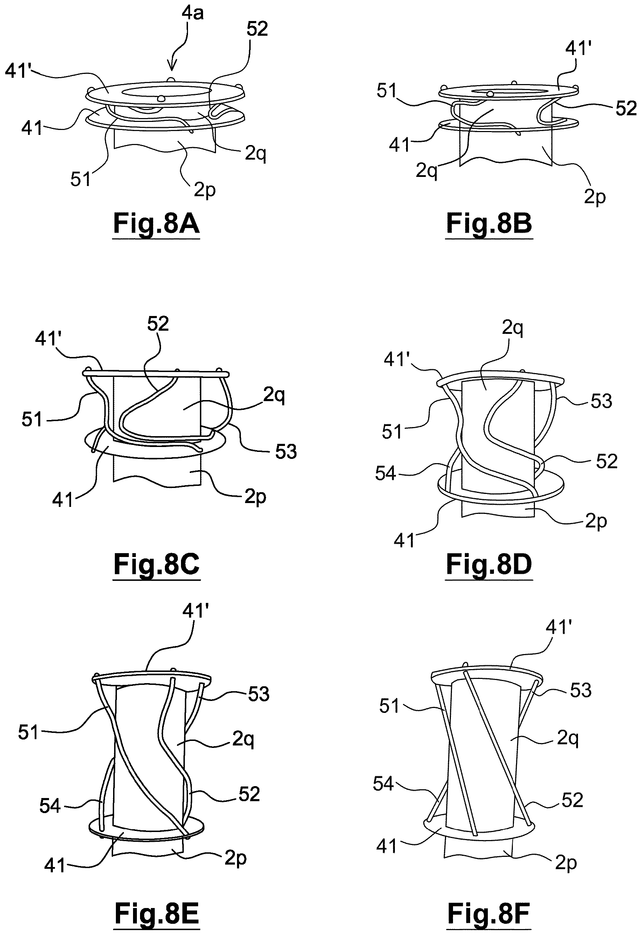

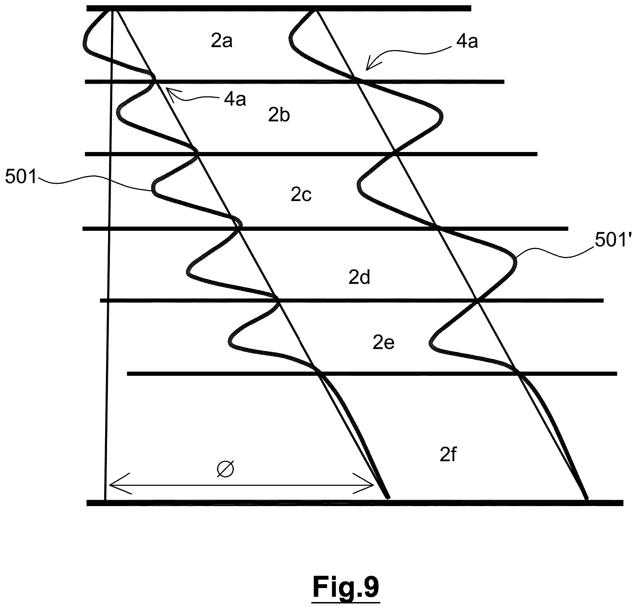

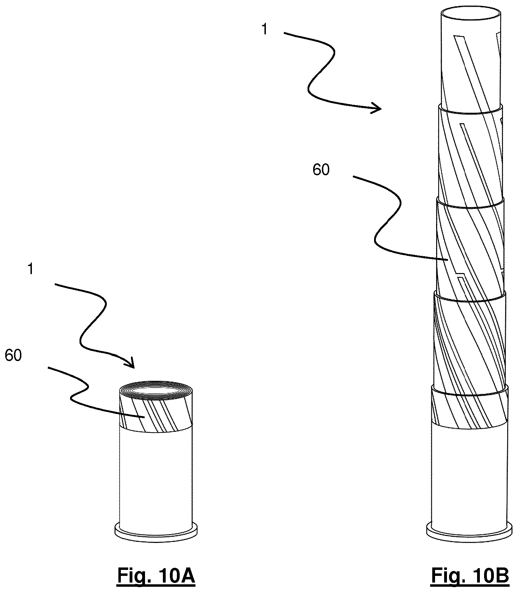

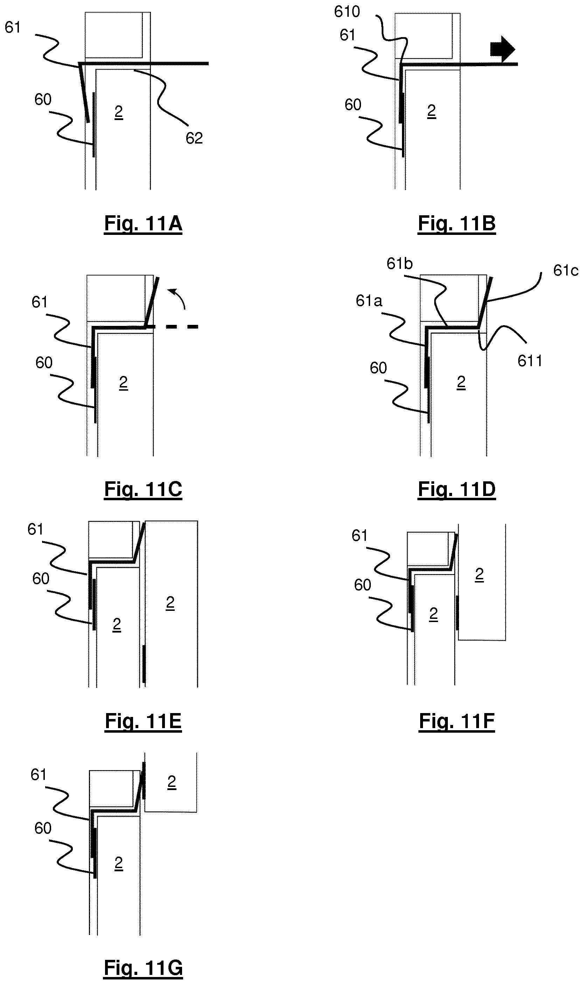

D'autres caractéristiques et avantages de l'invention seront apparents à la lecture de la description qui suit d'un exemple non limitatif de réalisation de l'invention en référence aux dessins qui représentent:
En figure 1: une vue en perspective d'une structure selon l'invention déployée;
Aux figures 2A à 2C: des vues schématiques des éléments de la structure de la figure 1 repliée et des détails de ces éléments;
En figure 3A: des vues en coupe de dispositifs de retenue de la structure en position repliée;
En figure 3B: une vue schématique en coupe de la structure repliée au niveau des dispositifs de la figure 2;
Aux figures 4A à 4C: des vues de détail de moyens de retenue en rotation et de verrouillage des segments;
Aux figures 5A et 5B: des vues de détail en perspective coupe de moyens alternatifs de retenue en rotation et de guidage des segments;
Aux figures 6A à 6C: des vues de détail de moyens de verrouillage des segments;
Aux figures 7 A à 7C: des vues en perspective et transparence des moyens des figures 5A à 6C;
Aux figures 8A à 8F: la représentation de la disposition de brins d'une antenne en fonction du déploiement du mât;
En figure 9: la représentation du positionnement angulaire des segments de mât pour l'enroulement des brins d'antenne.
Aux figures 10A et 10B : un mode de réalisation du mât, respectivement en positions repliée et déployée, dans lequel une antenne est disposée de manière hélicoïdale sur les segments du mât sous la forme d'une métallisation ;
Aux figures 11A à 11G : des vues en coupe verticale illustrant la connexion électrique au moyen d'une languette entre deux couches métalliques de segments adjacents du mât, dans le mode de réalisation des figures 10A et 10B.

### Description détaillée de modes de réalisation de l'invention

L'invention concerne une structure télescopique déployable au moyen d'un tube gonflable.

La structure télescopique 1 telle que représentée déployée en figure 1 est réalisée à partir de segments gigognes 2, ici 6 segments 2a à 2f qui peuvent être réalisés dans divers matériaux tels qu'un composite à base de fibre de verre ou un thermoplastique (par exemple PEEK) chargé verre ou non dans le cas où ils portent une antenne notamment ou éventuellement des matériaux métalliques ou carbone pour d'autres applications.

Selon l'exemple, les segments 2 du mât portent des spires 5 d'une antenne qui va se déployer avec le mât. Le mât peut aussi porter un ou plusieurs capteurs devant être disposés à distance du satellite ou bien encore porter des panneaux solaires.

Comme représenté dans la vue schématique de la figure 2A, les segments 2a à 2f de forme cylindrique s'emboîtent les uns dans les autres pour permettre de replier la structure et de la déplier.

Les segments 2 sont des segments annulaires emboîtés les uns dans les autres lorsque le mat est replié. Ils comportent une partie supérieure pourvue d'un rebord ou de pattes 4 telles que représentées en figure 2B qui portent des brins d'antenne ou des fils ou câbles de liaison à un appareil porté par le mât.

Le mât est déployable sous l'action d'un tube gonflable 3 d'encombrement schématisé en figure 2C qui se loge à l'intérieur des segments.

Les segments de l'invention sont constitués de telle sorte que la pression dans le tube gonflable 3 disposé à l'intérieur du segment le plus petit, ne doive pas être maintenue après le déploiement du mât, ce dernier conservant sa forme déployée sans maintien de pression dans le tube.

Pour ce faire, les segments 2a à 2f du plus petit au plus grand sont verrouillés les uns aux autres en position déployée par des moyens de verrouillage qui seront décrits ci-après ce qui réduit la quantité de gaz que doit générer un générateur de gaz initié pour le déploiement du mât et gonflant le tube gonflable. Ceci permet de réduire le volume et la masse du générateur et du tube, le générateur pouvant notamment dans cette application être un générateur simple et peu onéreux.

De retour à la figure 2A, en position repliée, les segments sont emboîtés avec le rebord ou les pattes d'un segment plus interne au-dessus du ou en contact avec le bord d'un segment plus externe.

Le mât comporte un couvercle 6 fixé au segment le plus interne 2a qui deviendra le segment distal du mât. Sur ce couvercle peut se fixer l'extrémité de l'antenne, un capteur ou tout autre équipement destiné à être utilisé à distance du satellite.

De retour à la figure 1, les pattes 4 ou le rebord 41, 41' de la figure 8 par exemple sont pourvus d'encoches ou de trous 4a de traversées des brins 5 de l'antenne ou de guidage d'un ou plusieurs câbles électriques d'alimentation d'un ou plusieurs capteurs ou autre équipement en bout de mât.

En figure 3A est représenté un dispositif 7 de verrouillage temporaire des segments en position repliée dit "pinpullers" en anglais pour verrou à tige rétractable. Ce dispositif comporte un actionneur et une tige rétractable 7a montrée déployée sur la vue du haut et rétractée sur la vue du bas.

Selon la figure 3B, deux desdits verrous 7 sont disposés dos à dos ou l'un au-dessus de l'autre tête bêche à l'intérieur du segment interne. Les tiges 7a des verrous à tiges rétractables traversent les segments qui sont munis de trous adaptés en sorte de verrouiller ces segments en position repliée pendant le vol de la fusée portant le satellite jusqu'au moment du déploiement du mât.

Une fois le satellite correctement positionné, les tiges 7a sont rétractées puis le tube gonflable 3 est gonflé au moyen de son générateur de gaz 8 ce qui déploie le mât.

Selon les figures 4A à 4C, les segments sont pourvus de moyens d'encliquetage mutuels, mât en position déployée.

Il est nécessaire d'éviter que les segments tournent les uns par rapport aux autres et pour ce faire des moyens d'indexage des segments sont prévus.

Selon la figure 4A et sur l'agrandissement de la figure 4B, l'intérieur d'un segment externe 21 comporte des nervures 10 selon des génératrices du segment et un logement 11 alors qu'un segment interne 22 comporte une languette ressort 12 pourvue d'un ergot 12a comme représenté en figure 4C. L'ergot 12a est dimensionné pour être retenu latéralement entre les nervures 10 lors du déploiement du mât et du coulissement du segment interne hors du segment externe jusqu'à se positionner sous l'action de la languette ressort dans le logement 11 pour verrouiller les segments en position déployée. Selon l'exemple représenté l'ergot 12a est disposé sur la face externe du segment interne et les nervures et le logement sur la face interne du segment externe. Dans la forme de réalisation de la figure 4A, les moyens d'indexage sont formés des nervures 10, logement 11 et languette ressort 12 incluant l'ergot 12a.

Les figures 5A à 7C représentent un dispositif perfectionné réalisant une butée inférieure entre les segments en position repliée, une butée supérieure en position dépliée ainsi qu'un verrouillage des segments entre eux et autorisant en outre un assemblage et un démontage aisé des segments pour les tests avant lancement.

Pour ce faire le dispositif comporte en premier lieu une combinaison pion/chemin de came avec, comme représenté sur la figure 5A:
- sur la face interne d'un segment 21' une rainure d'entrée de type baïonnette 17 débouchant dans une rainure allongée 18 qui ne débouche ni en face supérieure du segment ni en face inférieur mais qui définit deux points d'arrêt extrêmes 18a, 18b et,
- sur la face externe d'un segment 22', un pion 19 comme représenté à la figure 5B adapté à coulisser dans la rainure d'entrée puis dans la rainure allongée.

Le déplacement du pion dans la rainure 18 entre les points d'arrêt est schématisé aux figures 6A à 6C. La position de la figure 6A est une position mât replié où les segments sont emboîtés et le pion 19 est en butée sur un point d'arrêt bas 18b. La position de la figure 6B est une position intermédiaire pour laquelle le pion 19 est à mi-chemin entre les butées. La position de la figure 6C est une position mât déployé où les segments sont en extension avec le pion 19 en butée contre la butée d'arrêt haute 18a.

Le dispositif pion rainures forme en outre les moyens d'indexage entre les segments et la rainure allongée 18 bloque les segments en rotation les uns par rapport aux autres.

Cette configuration qui peut être inversée entre les segments interne et externe permet d'assembler et de désassembler les segments par insertion poussée puis rotation du segment interne dans le segment externe pour que les pions entrent dans la rainure 17, coulissent jusqu'au bas de cette rainure puis rejoignent la rainure 18 et puissent y coulisser également. Pour le désassemblage du mât et donc pour ressortir le segment interne du segment externe, on agit à l'inverse par rotation et extraction des pions par la rainure d'entrée 17.

Pour le verrouillage des segments en position déployée, le dispositif comporte des languettes ressort 13 tournées vers l'intérieur sur un segment externe 21' selon l'exemple de la figure 7A. Lorsque les segments sont en position mât replié, ces languettes 13 sont mises en contrainte contre la paroi externe du segment interne 22' comme représenté en figure 6A. Pendant le déploiement les languettes sont reçues dans des rainures de guidage 16 du segment interne 22' tel que représenté en figure 6B. Lorsque le mât est en position déployée comme représentée en figures 6C, ces languettes sont libérées et leur extrémité libre vient s'encliqueter contre le bord inférieur 22'a du segment interne.

Les rainures/languettes 13, 16 participent à l'indexage des segments lorsque les languettes coulissent dans ces rainures.

Ainsi les pions 19 et les rainures 18 retiennent les segment internes en position haute et en position basse dans les segments externes et les languettes ressort 13 réalisent le verrouillage des segments du mât en position déployée.

Pour limiter les efforts de déploiement du mât la rainure de guidage 16 telle que représentée notamment aux figure 6A et 6C et recevant la languette ressort 13 comporte une partie terminale en forme de rampe 16a contre laquelle glisse la languette ressort 13 avant de verrouiller les segments.

Il est à noter que pour assembler les segments selon la figure 7C il est nécessaire de repousser les languettes ressort 13 vers l'extérieur par exemple à l'aide d'un outil annulaire.

Pour démonter les segments, la languette 13 est susceptible de s'effacer par introduction de l'outil annulaire s'introduisant dans un segment externe pour permettre aux languettes 13 de s'effacer et ainsi permettre au segment interne de sortir en coulissant hors du segment externe.

Pour ce qui concerne le cas d'un mât porteur d'une antenne, comme vu plus haut, les brins d'antenne sont disposés entre les segments selon une configuration représentée aux figures 8A à 8F.

Selon cet exemple les segments sont munis de collerettes 41, 41' au lieu d'oreilles mais une réalisation où les collerettes sont remplacées par des oreilles percées réparties autour du bord supérieur des segments est possible. Les brins traversent les collerettes de la même façon que les oreilles par des trous réalisés dans celles-ci.

La figure 8A représente deux segments 2p, 2q enfoncés l'un dans l'autre, mât en position repliée.

Les brins d'antenne 51, 52 visibles traversant les collerettes 41, 41' sont repliés en forme de demi-boucle. Le déploiement progressif du mât est représenté aux figures 8B à 8E. Les demi-boucles se déplient progressivement lors de la sortie du segment interne 2q du segment externe 2p jusqu'à la position de la figure 8F pour laquelle les brins d'antenne sont tendus et les segments en position mât déployé.

Il est à noter que les passages des brins sont décalés angulairement pour donner une forme hélicoïdale aux brins autour des segments notamment dans le cas d'une antenne RF.

Les figures 8C à 8F permettent de voir deux brins 51, 52 entier, la partie supérieure d'un troisième brin 53 et la partie inférieure d'un quatrième brin 54 lors de leur mise en tension.

La figure 9 schématise pour un mât à six tronçons 2a à 2f deux variantes de pliage de deux brins 501 et 501'. Le brin 501 comporte des demi-boucles toutes orientées du même côté ce qui donne des petits rayons de pliage au brin au niveau des traversées entre segments alors que le brin 501' comporte une alternance de demi-boucles droites et gauches de sorte que le pliage du brin aux traversées entre les segments ne soient pas pliés. La seconde variante pour laquelle les brins d'antenne 501' sont repliés en demi-boucles alternativement droite et gauche réduit le pliage des brins au niveau des trous 4a de passage des brins entre les segments pour réduire les déformations des brins aux points de passage des brins entre les segments et donne une meilleure répartition des demi-boucles entre les brins.

Comme vu précédemment, lorsque le mât porte une antenne, les segments portent des brins 51, 52, 53, 54 de l'antenne traversant les segments par des trous 4a de passage dans les oreilles 4 ou les collerettes 41 des segments.

Les segments comme représentés, sont angulairement décalés entre eux pour donner une forme hélicoïdale aux brins de l'antenne.

Le décalage angulaire des segments successifs se cumulent pour obtenir un angle total Θ entre 360° et 400° selon les performances RF souhaitées.

Le tableau ci-dessous donne un exemple de réalisation avec l'angle de rotation pour chaque segment d'un mât à six segments.

| | Tronçon 1 | Tronçon 2 | Tronçon 3 | Tronçon 4 | Tronçon 5 | Tronçon 6 |
|---|---|---|---|---|---|---|
| Rotation du brin en degrés | 60,6 | 54,1 | 60,6 | 67,1 | 73,6 | 81,4 |

Dans une forme de réalisation alternative illustrée sur les figures 10A-10B et 11A-11G, l'antenne disposée sur le mât consiste en une métallisation formée de couches métalliques 60 disposées sur les segments cylindriques gigognes dudit mât de sorte à former un motif hélicoïdal lorsque le mât est déplié (voir Figure 10B).

Le métal utilisé peut par exemple du cuivre, du nickel ou de l'or.

En référence aux figures 11A-11G, les couches métalliques 60 d'un segment sont connectées électriquement aux couches métalliques du ou des segments adjacents au moyen de languettes de connexion 61, par exemple en cuivre, disposées dans des fentes 62 des segments 2 du mât. On entend par « segments adjacents » des segments immédiatement voisins lorsque le mât est en position repliée. Pour un segment donné, le(s) segment(s) adjacent(s) correspond(ent) donc au(x) segment(s) du mât de diamètre immédiatement inférieur et/ou supérieur.

Les fentes sont disposées dans des parties supérieures des segments, de sorte à pouvoir assurer une connexion électrique lorsque le mât est déployé.

Les figures 11A à 11D illustrent la mise en place de la languette de connexion 61 avant assemblage des segments de mât entre eux. En référence aux figures 11A et 11B, la languette de connexion 61 est introduite par une surface externe d'un segment de mât dans la fente 62 disposée en partie haute dudit segment, dans le sens de la flèche. La languette présente une première pliure 610 de sorte à présenter un angle sensiblement droit de sorte qu'une première partie, ou premier bras 61a de la languette de connexion vient en contact avec la couche électrique 60 du segment, tandis que l'autre partie traverse la fente 62 et débouche sur une surface interne dudit segment. La partie de languette débouchant sur la surface interne du segment est pliée (figure 11C) en sens opposé par rapport à la première pliure. La languette présente ainsi une seconde pliure 611, comme illustré sur la figure 11D, pour former un bras intermédiaire ou second bras 61b, disposé entre la première pliure 610 et la seconde pliure 611, et un troisième bras 61c.

Les figures 11E à 11G illustrent la mise en place du contact électrique entre les couches électriques de deux segments adjacents, un segment « externe » et un segment « interne », lors du déploiement du mât. On entend par « externe » et « interne » qu'un diamètre moyen du segment externe est plus important que celui du segment interne adjacent. Une languette a été disposée dans une fente du segment externe selon le procédé vu plus haut en référence aux figures 11A-11D ; le troisième bras 61c est en contact avec une partie non métallisée du segment interne. Lors du déploiement, le segment interne se déplace vers le haut relativement au segment externe, comme illustré sur les figures. Lorsque le mât est déployé, la languette de connexion est en contact avec une couche métallique disposée sur une partie inférieure du segment interne, assurant ainsi une connexion électrique entre les couches métalliques des segments interne et externe.

L'invention définie par les revendications n'est pas limitée aux exemples représentés et notamment le nombre de segments peut être différent du nombre de segments représentés.

## Revendications

1. Dispositif porteur pour un équipement d'un satellite, sous forme d'un mât télescopique, ledit dispositif comportant un ensemble de segments cylindriques gigognes (2, 2a, 21, 22), emboîtés les uns dans les autres lorsque le mât est replié, un tube gonflable (3) sous l'action duquel le mât est déployable, les segments étant pourvus de moyens (4, 6) d'accrochage d'un équipement porté par le mât, ledit dispositif étant **caractérisé en ce que** le tube gonflable (3) est disposé à l'intérieur du segment le plus petit.

2. Dispositif porteur selon la revendication 1 dans lequel le tube gonflable comprend un générateur de gaz (8), ledit générateur de gaz disposé à l'intérieur des segments gigognes imbriqués.

3. Dispositif porteur selon la revendication 2 comportant une base (100) support du segment le plus externe (2b) et du générateur de gaz (8).

4. Dispositif porteur selon la revendication 1, 2 ou 3 comportant un couvercle (6) support d'un équipement et dont la face inférieure constitue une face d'appui lors du déploiement du tube gonflable (3).

5. Dispositif porteur selon l'une quelconque des revendications précédentes comportant des verrous (7) à tige rétractable (7a) adaptés à verrouiller ensemble les segments imbriqués en position mât replié.

6. Dispositif porteur selon l'une quelconque des revendications précédentes dans lequel les moyens d'accrochage sont des oreilles (4) ou des collerettes.

7. Dispositif porteur selon la revendication 6 dans lequel, segments en position mât replié, la collerette ou les oreilles d'un segment de rang n reposent sur le bord du segment de rang n-1 qui l'entoure.

8. Dispositif porteur selon la revendication 6 ou 7 dans lequel les oreilles comportent des trous de passage de câbles antenne (5) se déployant avec le mât.

9. Dispositif porteur selon l'une quelconque des revendications précédentes dans lequel les segments sont pourvus de moyens d'encliquetage mutuels (11, 12) mât en position dépliée et de nervures (10) s'opposant à une rotation des segments les uns par rapport aux autres.

10. Dispositif porteur selon l'une quelconque des revendications 1 à 4 et 6 à 8, dans lequel les segments comportent un système de verrouillage des segments entre eux en position dépliée (18a, 19, 13, 22a) et des moyens de retenue sous la forme d'une butée supérieure (18a) entre les segments en position dépliée et d'une butée inférieure (18b) entre les segments en position repliée, lesdits moyens de butée faisant partie d'un système pion (19) chemin de came (18) pourvu d'une rainure d'entrée (17) de type baïonnette et d'une rainure allongée (18) dont les extrémités forment lesdits moyens de butée (18a, 18b) pour le pion (19).

11. Dispositif porteur selon la revendication 10, dans lequel le système de verrouillage comporte d'une part le pion (19) et la butée supérieure (18a) et d'autre part une languette ressort (13) portée par un segment externe (21) dont l'extrémité libre vient s'encliqueter sur un bord inférieur (22a) d'un segment interne (22) mât en position dépliée.

12. Dispositif porteur selon la revendication 11, dans lequel la languette ressort est reçue dans une rainure de guidage (16).

13. Dispositif porteur selon la revendication 11 ou 12, dans lequel les segments sont démontables au moyen d'un outil annulaire du diamètre d'un segment interne glissé dans un segment externe et repoussant la languette pour permettre le passage et l'extraction d'un segment interne.

14. Dispositif porteur selon l'une quelconque des revendications 10 à 13, dans lequel les segments sont pourvus de moyens d'indexage (18, 19) s'opposant à une rotation des segments les uns par rapport aux autres.

15. Ensemble comportant un dispositif porteur selon l'une quelconque des revendications précédentes et une antenne.

16. Ensemble selon la revendication 15 dans lequel l'antenne consiste en une métallisation formée de couches métalliques (60) disposées sur les segments cylindriques gigognes de sorte à former un motif hélicoïdal lorsque le mât est déplié.

17. Ensemble selon la revendication 16 dans lequel les couches métalliques (60) d'un segment sont connectées électriquement aux couches métalliques du ou des segments adjacents au moyen de languettes de connexion (61) disposées dans des fentes (62) desdits segments.

18. Ensemble selon la revendication 16 dans lequel les couches métalliques sont en cuivre, ou en nickel, ou en or.

19. Ensemble selon la revendication 15 dans lequel l'antenne comporte des câbles antenne (5) disposés sur le mât de manière hélicoïdale.

## Patentansprüche

1. Trägervorrichtung für eine Ausrüstung eines Satelliten in Form eines Teleskopmasts, wobei die Vorrichtung eine Gruppe zylindrischer, ausziehbarer Segmente (2, 2a, 21, 22) umfasst, die ineinander greifen, wenn der Mast zusammengeklappt ist, einen aufblasbaren Schlauch (3), unter dessen Wirkung der Mast entfaltet werden kann, wobei die Segmente mit Mitteln (4, 6) zum Einhängen einer von dem Mast getragenen Ausrüstung versehen sind, wobei die Vorrichtung **dadurch gekennzeichnet ist, dass** der aufblasbare Schlauch (3) im Inneren des kleinsten Segments angeordnet ist.

2. Trägervorrichtung nach Anspruch 1, bei der der aufblasbare Schlauch einen Gasgenerator (8) aufweist, wobei der Gasgenerator im Inneren der verschachtelten, ausziehbaren Segmente angeordnet ist.

3. Trägervorrichtung nach Anspruch 2, die eine Basis (100) umfasst, die das äußerste Segment (2b) und den Gasgenerator (8) hält.

4. Trägervorrichtung nach Anspruch 1, 2 oder 3, umfassend eine Abdeckung (6), die eine Ausrüstung hält und deren Unterseite beim Entfalten des aufblasbaren Schlauchs (3) eine Auflagefläche bildet.

5. Trägervorrichtung nach einem der vorhergehenden Ansprüche, die Verriegelungen (7) mit einziehbarem Schaft (7a) umfasst, die so angepasst sind, dass sie die verschachtelten Segmente in zusammengeklappter Position des Mastes miteinander verriegeln.

6. Trägervorrichtung nach einem der vorhergehenden Ansprüche, bei der die Einhängemittel Ohren (4) oder Einhängeflansche sind.

7. Trägervorrichtung nach Anspruch 6, bei der, mit Segmenten in der zusammengeklappten Position des Mastes, die Einhängeflansche oder Ohren eines Segments der Reihe n auf dem Rand des umgebenden Segments der Reihe n-1 aufliegen.

8. Trägervorrichtung nach Anspruch 6 oder 7, bei der die Ohren mit dem Mast entfaltende Durchgangslöcher für Antennenkabel (5) umfassen.

9. Trägervorrichtung nach einem der vorhergehenden Ansprüche, bei der die Segmente mit Mitteln (11, 12) zum gegenseitigen Einrasten des Masts in der ausgeklappten Position und mit Rippen (10) versehen sind, die einer Drehung der Segmente relativ zueinander entgegenwirken.

10. Trägervorrichtung nach einem der Ansprüche 1 bis 4 und 6 bis 8, bei der die Segmente ein System zur Verriegelung der Segmente untereinander in der ausgeklappten Position (18a, 19, 13, 22a) und Haltemittel in Form eines oberen Anschlags (18a) zwischen den Segmenten in ausgeklappter Position und eines unteren Anschlags (18b) zwischen den Segmenten in der zusammengeklappten Position umfassen, wobei die Anschlagmittel Teil eines Zapfen(19)/Kurvenbahn(18)-Systems sind, das mit einer bajonettartigen Eingangsnut (17) und einer länglichen Nut (18) versehen ist, deren Enden die Anschlagmittel (18a, 18b) für den Zapfen (19) bilden.

11. Trägervorrichtung nach Anspruch 10, bei der das Verriegelungssystem einerseits den Zapfen (19) und den oberen Anschlag (18a) und andererseits eine Federzunge (13) umfasst, die von einem äußeren Segment (21) getragen wird, dessen freies Ende auf einen unteren Rand (22a) eines Innensegments (22) einrastet, wenn sich der Mast in der ausgeklappten Position befindet.

12. Trägervorrichtung nach Anspruch 11, bei der die Federzunge in einer Führungsnut (16) aufgenommen ist.

13. Trägervorrichtung nach Anspruch 11 oder 12, bei der die Segmente mit Hilfe eines ringförmigen Werkzeugs abnehmbar sind, dessen Durchmesser einem Innensegment entspricht, das in ein Außensegment geschoben wird und die Zunge zurückdrängt, um das Durchführen und Herausziehen eines Innensegments zu ermöglichen.

14. Trägervorrichtung nach einem der Ansprüche 10 bis 13, bei der die Segmente mit Indexierungsmitteln (18, 19) versehen sind, die einer Drehung der Segmente relativ zueinander entgegenwirken.

15. Anordnung, die eine Trägervorrichtung nach einem der vorhergehenden Ansprüche und eine Antenne umfasst.

16. Anordnung nach Anspruch 15, bei der die Antenne aus einer Metallisierung besteht, die aus Metallschichten (60) gebildet ist, die auf den ausziehbaren, zylindrischen Segmenten so angeordnet sind, dass sie ein schraubenförmiges Muster bilden, wenn der Mast ausgeklappt ist.

17. Anordnung nach Anspruch 16, bei der die Metallschichten (60) eines Segments mittels in Schlitzen (62) der Segmente angeordneter Verbindungszungen (61) elektrisch mit den Metallschichten des oder der benachbarten Segmente verbunden sind.

18. Anordnung nach Anspruch 16, bei der die Metallschichten aus Kupfer oder Nickel oder Gold bestehen.

19. Anordnung nach Anspruch 15, bei der die Antenne Antennenkabel (5) umfasst, die schraubenförmig auf dem Mast angeordnet sind.

## Claims

1. Carrier device for satellite equipment, in the form of a telescopic mast, said device comprising a set of nesting cylindrical segments (2, 2a, 21, 22), fitted in one another when the mast is retracted, an inflatable tube (3) under the action which the mast is deployable, the segments being provided with means (4, 6) for attaching equipment carried by the mast, said device being **characterised in that** the inflatable tube (3) is disposed inside the smallest segment.

2. Carrier device according to claim 1, wherein the inflatable tube comprises a gas generator (8), said gas generator disposed inside fitted-together nesting segments.

3. Carrier device according to claim 2, comprising a base (100) supporting the outermost segment (2) and the gas generator (8).

4. Carrier device according to claim 1, 2 or 3, comprising a cover (6) supporting equipment and the bottom face of which constitutes a support face when the inflatable tube (3) is deployed.

5. Carrier device according to any one of the preceding claims, comprising bolts (7) with a retractable rod (7) adapted to lock together the fitted-together segments in the retracted-mast position.

6. Carrier device according to any one of the preceding claims, wherein the attachment means are lugs (4) or collars.

7. Carrier device according to claim 6, wherein, with the segments in the retracted-mast position, the collar or lugs of a segment of rank n rest on the edge of the segments of rank n-1 that surrounds it.

8. Carrier device according to claim 6 or 7, wherein the lugs comprise passage holes for antenna cables (5) deploying with the mast.

9. Carrier device according to any one of the preceding claims, wherein the segments are provided with mutual snapping-in means (11, 12) with the mast in the extended position and with ribs (10) opposing a rotation of the segments with respect to one another.

10. Carrier device according to any one of claims 1 to 4 and 6 to 8, wherein the segments comprise a system for locking the segments together in the extended position (18a, 19, 13, 22a) and holding means in the form of an upper stop (18a) between the segments in the extended position and a lower stop (18b) between the segments in the retracted position, said stop means forming part of a pin (19) and cam-track (18) system provided with an entry groove (17) of the bayonet type and an elongate groove (18) the ends of which form said stop means (18a, 18) for the pin (19).

11. Carrier device according to claim 10, wherein the locking system comprises on the one hand the pin (19) and the upper stop (18a) and on the other hand a spring tongue (13) carried by an external segment (21) the free end of which snaps onto a bottom edge (22a) of an internal segment (22) with the mast in the unfolded position.

12. Carrier device according to claim 11, wherein the spring tongue is received in a guide groove (16).

13. Carrier device according to claim 11 or 12, wherein the segments are demountable by means of an annular tool with the diameter of an internal segment slipped into an external segment and pushing the tongue to enable an internal segment to pass and be extracted.

14. Carrier device according to any one of claims 10 to 13, wherein the segments are provided with locating means (18, 19) opposing a rotation of the segments with respect to one another.

15. Assembly comprising a carrier device according to any one of the preceding claims and an antenna.

16. Assembly according to claim 15, wherein the antenna consists of a metallisation formed by metal layers (60) disposed on the nesting cylindrical segments so as to form a helical pattern when the mast is extended.

17. Assembly according to claim 16, wherein the metal layers (60) of a segment are electrically connected to the metal layers of the adjacent segment or segments by means of connection tongues (61) disposed in slots (62) of said segments.

18. Assembly according to claim 16, wherein the metal layers are made from copper or nickel or gold.

19. Assembly according to claim 15, wherein the antenna comprises antenna cables (5) disposed on the mast helically.
